# EUROPEAN PATENT SPECIFICATION

(11) **EP 4 325 592 B1**
(45) Date of publication and mention of the grant of the patent: **02.12.2026**
(21) Application number: 23785017.7
(22) Date of filing: 06.04.2023
(51) Int. Cl.: B23K 26/00, B23K 26/352, H01M 4/04, H01M 4/139, B23K 101/36

(54) **ELECTRODE SHAPE CONTROL METHOD AND ELECTRODE MANUFACTURING METHOD**
ELEKTRODENFORMSTEUERUNGSVERFAHREN UND ELEKTRODENHERSTELLUNGSVERFAHREN
PROCÉDÉ DE COMMANDE DE FORME D'ÉLECTRODE ET PROCÉDÉ DE FABRICATION D'ÉLECTRODE

(30) Priority: 07.04.2022 KR 20220043367; 05.04.2023 KR 20230044807
(43) Date of publication of application: 21.02.2024
(73) Proprietor: LG Energy Solution, Ltd., Seoul 07335 (KR)
(72) Inventor: CHOI, Min Hyuck, Daejeon 34122 (KR); PARK, Joon Sun, Daejeon 34122 (KR); LEE, Taek Soo, Daejeon 34122 (KR); KIM, Man Hyeong, Daejeon 34122 (KR); KIM, Guk Tae, Daejeon 34122 (KR); JEON, Shin Wook, Daejeon 34122 (KR)
(74) Representative: Plasseraud IP
(86) International application number: PCT/KR2023/004650
(87) International publication number: WO 2023/195793

(56) References cited:
- EP-B1- 2 424 010
- WO-A1-2018/004177
- CN-A- 102 473 903
- JP-A- 2008 004 281
- JP-A- 2015 076 229
- KR-A- 20120 117 635
- KR-A- 20170 057 953
- KR-B1- 101 551 916
- KR-B1- 101 958 881

## Description

### [Technical Field]

This application claims the benefit of priority based on Korean Patent Application No. 10-2022-0043367 filed on April 07, 2022, and Korean Patent Application No. 10-2023-0044807 filed on April 05, 2023.

The present invention relates to a method for controlling an electrode shape and a method of manufacturing an electrode by fluidizing a part of an electrode slurry by irradiating a surface thereof with a laser capable of heat transfer after coating of the electrode slurry.

### [Background Art]

In general, secondary batteries refers to chargeable and dischargeable batteries, unlike primary batteries that are not chargeable. The secondary batteries are being widely used in high-tech electronic fields such as mobile phones, notebook computers, camcorders, and the like.

Such a secondary battery is classified into can type secondary battery and a pouch type secondary battery. The can type secondary battery includes an electrode assembly, an electrolyte, a can accommodating the electrode assembly and the electrolyte, and a cap assembly mounted in an opening of the can. The electrode assembly has a structure in which electrodes and separators are alternately stacked. Also, the electrode includes a current collector and an electrode active material coated on the current collector.

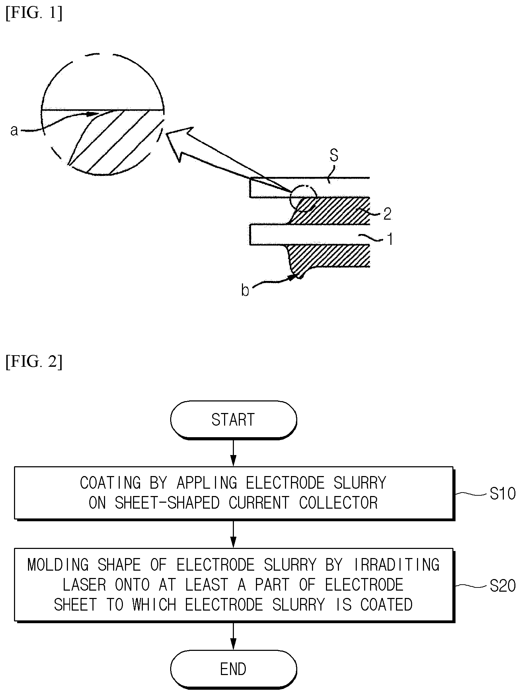

One of the major research projects on secondary batteries is enhancing quality and safety. This will be described with reference to FIG. 1. FIG. 1 is a diagram illustrating a problem of a lithium secondary battery according to the prior art.

Referring to FIG. 1, an electrode composite layer 2 is formed on an electrode current collector 1 by an electrode slurry coating method. The electrode composite layer 2 is coated and formed on both surfaces (top and bottom surfaces) of the electrode current collector 1.

In the case of the top coating formed on the top surface of the electrode current collector 1, an electrode slurry at both ends of the electrode composite layer 2 flows down under the effect of external forces such as gravity, centrifugal force, etc. The area where the electrode slurry flows down is conventionally referred to as the sliding area.

As a result of these sliding areas, a capacity loss occurs that causes the battery capacity to be lower than the target value. In addition, the thickness of both ends of the electrode composite layer 2 is reduced, and the contact with the separator S becomes uneven, resulting in gaps (refer to symbol a in FIG. 1), and the overall quality of the secondary battery degrades.

In the case of the back coating formed on the bottom surfaces of the electrode current collector 1, the electrode slurry flows down due to gravity before the electrode slurry dries, resulting in both ends of the electrode composite layer 2 to protrude downward (refer to symbol b in FIG. 1), and the protrusions are subjected to high stress during the subsequent rolling process.

Meanwhile, when a positive electrode and negative electrode encounter the sliding area, the N/P ratio may be different from the design value, and furthermore, if the N/P ratio is reversed, lithium may precipitate from the sliding area.

Korean Patent Publication No. 10-2017-0057953 discloses an electrode molding device that removes a part of the electrode composite layer by irradiating the surface of an electrode with a laser beam. The technology disclosed in the above literature can mold the shape of the electrode surface, but a part of the electrode composite layer is removed, resulting in a capacity loss equal to the removed electrode composite layer.

Therefore, it is necessary to develop a technology for controlling the shape of the electrode after coating the electrode while minimizing the capacity loss.

Examples of the background art can be found in KR 101 551 916 B1 and EP 2 424 010 B1.

### [Disclosure]

### [Technical Problem]

An object of the present invention is to provide a method for controlling an electrode shape and a method of manufacturing capable of controlling the shape of an electrode and minimizing capacity loss after an electrode coating.

### [Technical Solution]

According to the present invention, provided is a method for controlling an electrode shape including molding the shape of an electrode slurry by irradiating a laser to at least a part of an electrode sheet on which the electrode slurry is applied, causing the electrode slurry of the irradiated portion of the electrode sheet to move to an adjacent portion.

In one embodiment of the present invention, the electrode slurry of the electrode sheet may be in a non-solidified state when the molding is performed.

In the present invention, the laser is an ultrahigh frequency near-infrared laser with a wavelength ranging from 500 nm to 1500 nm.

In one embodiment of the present invention, the molding may include a process of irradiating a laser using a laser module, and the laser module includes a laser oscillator that generates a laser and a masking member coupled below the laser oscillator, provided with one or more openings that allow at least a part of the laser generated from the laser oscillator to pass through.

In one exemplary embodiment of the present invention, the laser module may be configured to allow adjusting the position of the opening and the area of the one or more opening.

In one embodiment of the present invention, the laser module may be configured to allow adjusting the position of the one or more openings, based on the transverse direction (TD) of the electrode sheet.

In one exemplary embodiment of the present invention, the laser module can control an amount of movement of the electrode slurry by controlling one or more of the following conditions: the vertical distance between the laser oscillator and the electrode sheet, the vertical distance between the masking member and the electrode sheet, and the output of the laser and the opening area of the one or more openings.

In one exemplary embodiment of the present invention, the laser module can control a direction of movement of the electrode slurry by adjusting the position of the one or more openings.

In one embodiment of the present invention, the masking member is a plate-shaped member provided with a plurality of through-holes, and for opening and closing at least one of the plurality of through-holes, includes an opening and closing member slidably movably coupled to one side of a plane of the plate-shaped member, and one or more of the plurality of through-holes that is not shielded by the opening and closing member may form the one or more openings.

In an embodiment of the present invention, the masking member includes: a plurality of plate-shaped blocks arranged in a line along a transverse direction of the electrode sheet; a block driver for horizontally moving each of the plurality of plate-shaped blocks along the transverse direction of the electrode sheet; and spaced apart spaces of mutually adjacent plate-shaped blocks which can form the one or more openings.

In one embodiment of the present invention, at least one or more among the laser oscillator and the masking member may be configured to be reciprocally movable along a direction perpendicular to the plane of the electrode sheet.

According to another exemplary embodiment of the present invention, provided is a method of manufacturing an electrode including: a coating by applying an electrode slurry to a sheet-shaped current collector; molding by irradiating a laser onto at least a part of the electrode sheet to which the electrode slurry is coated, causing the electrode slurry in the irradiated portion of the electrode sheet to move to adjacent portions, thereby molding the electrode slurry; and drying the electrode sheet.

In one exemplary embodiment of the present invention, the electrode slurry of the electrode sheet may be in a non-solidified state.

In one exemplary embodiment of the present invention, the molding may be performed before an initial stage of the drying of the electrode sheet.

In one exemplary embodiment of the present invention, the molding may be performed before the drying of the electrode sheet.

### [Advantageous Effects]

A method for controlling an electrode shape and a method of manufacturing an electrode according to the present invention can control the electrode shape without changing the coating conditions in the coating, thereby preventing deterioration in the quality of the electrode due to change in the coating conditions.

In addition, the present invention can control the direction of movement of an electrode slurry and the amount of movement of an electrode slurry to change the electrode shape, and the loss of the electrode slurry can be minimized.

### [Brief Description of the Drawings]

FIG. 1 is a drawing illustrating an electrode shape where sliding areas occur after electrode coating.
FIG. 2 is a flowchart illustrating a method for controlling an electrode shape according to one exemplary embodiment of the present invention.
FIG. 3 is a diagram briefly illustrating a method for controlling an electrode shape according to one exemplary embodiment of the present invention.
FIG. 4 and FIG. 5 are drawings illustrating a process for controlling the position of laser irradiation on an electrode sheet and the amount of laser irradiation according to one exemplary embodiment of the present invention.
FIG. 6 is a side view of an electrode shape molding device according to one exemplary embodiment of the present invention.
FIG. 7 is a plan view of FIG. 6.
FIG. 8 is a graph illustrating the result of thickness measurements of each electrode slurry before and after laser irradiation according to one exemplary embodiment of the present invention.
FIG. 9 is a side view of a laser module according to a first embodiment of the present invention.
FIG. 10 is a diagram illustrating the operation of a masking member according to a first embodiment.
FIG. 11 is a side view of a laser module according to a second embodiment of the present invention.
FIG. 12 is a diagram illustrating the operation of the masking member according to a second embodiment.
FIG. 13 is a flowchart illustrating a method of manufacturing an electrode according to one exemplary embodiment of the present invention.

### [Description of reference numerals]

100: electrode shape molding device
110: laser module
111,211: laser oscillator
112,212: masking member
112a: opening
113: opening and closing member
120,220: laser module driver
130: frame
140: transferring portion
10: electrode sheet
12: electrode slurry (coating portion)
11: current collector (non-coating portion)

### [Best mode]

Hereinafter, the present invention will be described in detail. Prior to this, terms or words used in the present specification and claims should not be restrictively interpreted as ordinary meanings or dictionary-based meanings, but should be interpreted as meanings and concepts consistent with the technical ideas of the present invention on the basis of the principle that an inventor can properly define the concept of a term to describe and explain his or her invention in the best way.

Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

### Electrode Shape Control Method

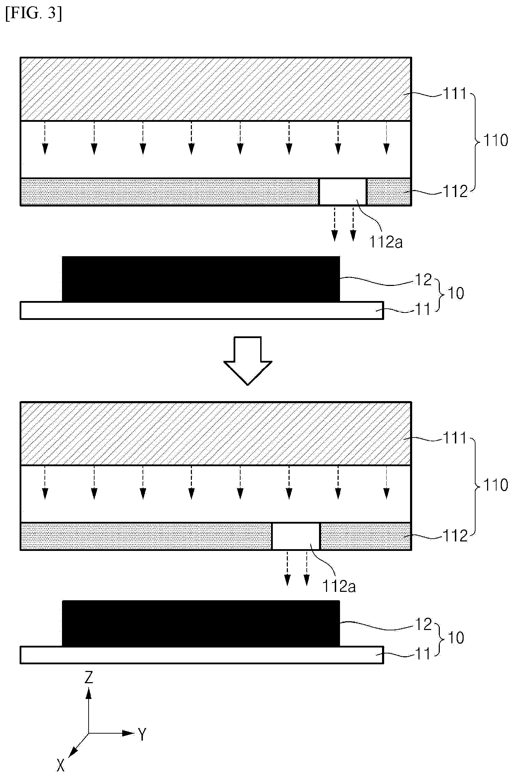

FIG. 2 is a flowchart illustrating an electrode shape control method according to one exemplary embodiment of the present invention, and FIG. 3 is a diagram briefly illustrating an electrode shape control method according to one exemplary embodiment of the present invention.

Referring to FIG. 2, an electrode shape control method according to an exemplary embodiment of the present invention may include coating S10 in which an electrode slurry is applied to a sheet-shaped collector; and molding S20 in which a laser is irradiated on at least a part of the electrode sheet on which the electrode slurry is applied, and the laser causes the electrode slurry of the irradiated portion to transfer to an adjacent portion, thereby including molding the shape of the electrode slurry.

The electrode shape control method according to an embodiment of the present invention may include a process of irradiating laser on a surface of the electrode slurry in the molding S20, and such light energy of the laser, in the process of interacting with the electrode slurry, is absorbed to the electrode slurry and converted into heat energy, and the heat generated at this time is transferred to the surroundings.

Such thermal energy increases the temperature of the laser-irradiated area of the electrode slurry and its surroundings, due to the increase in temperature, the viscosity of the electrode slurry decreases, facilitating its movement to adjacent portions. In addition, such laser can penetrate into the lower layers of the electrode sheet, and thus not only the surface of the electrode slurry, but also the electrode slurry adjacent to the current collector is in a state that can be flowed by a laser. Therefore, the electrode shape can be easily controlled to the desired shape by an operator.

According to one embodiment of the present invention, the electrode slurry of the electrode sheet is preferably in a non-solidified state. This is because there is no or very little solvent component in the electrode slurry that is completely dried and solidified, thereby the movement of the electrode slurry is not easy even if the laser is irradiated, and the light energy of the laser may degrade the solidified electrode slurry and cause deintercalation of the electrode slurry.

The electrode slurry of the electrode sheet may be in a non-solid state in the initial stage of the coating of the electrode sheet or the drying of the electrode sheet. Here, in the initial stage of the drying may be an interval during which the drying has progressed such that 30% or more, or 50% or more, or 60% or more of the solvent remained in the electrode slurry, based on the total amount of solvent to be removed from the electrode slurry through the drying.

Therefore, the method for controlling the electrode shape according to such embodiment may also have the advantage of having almost no capacity loss, as the electrode slurry is moved around by irradiating the part of the electrode slurry that needs deformation, unlike the conventional method of removing a part of the electrode slurry by etching with a laser.

The coating S10 may be applying an electrode slurry on the sheet-shaped collector. In the present invention, the electrode slurry may include both an electrode forming slurry including an electrode active material and an electrode composite layer formed by applying such an electrode forming slurry. In addition to the electrode formation slurry and the electrode composite layer described above, the electrode slurry may also include a composition for an insulating coating layer that is applied to the periphery of the portion where the electrode slurry is applied to prevent short circuits, and an insulating coating layer formed by applying the composition for the insulating coating layer.

The coating S10 may specifically include preparing an electrode-forming slurry in which an electrode active material is mixed/stirred in a solvent and applying it to a current collector to form an electrode composite layer. Such an electrode formation slurry may further include, in additional to the solvent and electrode active material, one or more materials selected from a binder, a conductor, and other additives. By applying the electrode forming slurry, an electrode composite layer is formed.

An insulating coating layer may be formed by applying a composition for an insulating coating layer, including an insulating polymer and inorganic particles mixed/stirred in a solvent on the current collector. The composition for the insulating coating layer may be applied around an end of the electrode composite layer or may overlap a part of the end of the electrode composite layer.

Such electrode forming slurry and composition for an insulating coating layer may be coated on the current collector by a coating device known in the art, such as, but not limited to, a coating die, coating roll, or slide-slot, as long as it is in a form capable of coating the electrode forming slurry and composition for an insulating coating layer.

A coating device including a coating die may include a structure comprising: a coating die having an outflow slot for outflowing an electrode forming slurry toward a current collector, a coater roll spaced apart at a predetermined interval from the outflow slot of the coating die, and a coater roller that transfers the collector by rotation for coating the current collector with an electron active material slurry by the coating die.

Coating devices can also control the electrode shape by controlling factors such as the gap between the coating die and the current collector, the viscosity of the electrode forming slurry or the viscosity of the composition for the insulating coating layer, the rotational speed of the coater roll, the discharge pressure of the coating die, etc., but when these factors are controlled, the loading amount of the electrode is also changed. The electrode shape control method of the present invention has the advantage of not having to change these coating control factors.

According to one exemplary embodiment, the molding S20 may include irradiating the electrode sheet with a laser using a laser module, wherein the laser module is not limited in form as long as it is capable of irradiating the electrode slurry with a laser.

Referring to FIG. 2, in one exemplary embodiment, the laser module 110 may include a laser oscillator 111 that generates a laser; and a masking member 112.

The laser oscillator 111 is not particularly limited in embodiment, as long as it is capable of generating a laser to be irradiated onto at least a part of the electrode sheet 10.

In one exemplary embodiment, the laser generated by the laser oscillator 111 is an ultrahigh frequency near-infrared laser. An ultrahigh frequency near-infrared laser is preferred because its short wavelength reaches well into the lower part of the thickness direction of the electrode sheet, allowing the electrode slurry adjacent to the current collector to also move to the adjacent portion.

A wavelength length of such an ultrahigh frequency near-infrared laser is from 500 nm to 1500 nm, preferably from 600 nm to 1300 nm, and most preferably from 700 nm to 1100 nm. When the wavelength length of the laser satisfies the above range, it is preferable that the laser can reach the lower part of the electrode sheet while not causing damage to the electrode slurry.

The power of the laser generated by the laser oscillator 111 is adjustable by the controller (not shown), and by adjusting the power of the laser, the amount of movement of the electrode slurry can be controlled.

In one exemplary embodiment, the masking member 112 may be coupled to a lower side of the laser oscillator 111 and may include one or more openings 112a through which at least a part of the laser generated by the laser oscillator 111 pass through.

The masking member 112 may be positioned on the lower side of the laser oscillator 111, relative to a vertical direction (z-direction) in the plane of the electrode sheet, and the masking member 112 may function to screen the laser generated from the laser oscillator 111 from reaching the electrode sheet 10 on the lower side.

The masking member 112 may be provided with at least one opening 112a, and the laser generated by the laser oscillator 111 may be irradiated onto the electrode sheet on the lower side only through the opening 112a.

In one exemplary embodiment, the laser module 110 may be configured to allow adjustment of the position of the opening 112a and the area of the opening. The masking member 112 according to this exemplary embodiment can adjust the position at which the laser is irradiated on the electrode sheet and the amount of irradiation of the laser.

As the position of the opening 112a is adjustable, the position of the area where the laser passes through the opening 112a and irradiates the electrode slurry can be adjusted. Since the electrode slurry is movable, from the portion of the electrode slurry that is initially irradiated by the laser to the portion of the electrode slurry that is later irradiated by the laser, the adjustable position of the opening 112a may allow control of the direction of movement of the electrode slurry.

Furthermore, since the opening area of the opening 112a is adjustable, the amount of movement of the electrode slurry can be controlled. In other words, the larger the opening area, the greater the total amount of light energy of the irradiated laser, and thus the greater the amount of electrode slurry movement, and conversely, the smaller the opening area, the smaller the total amount of light energy of the irradiated laser, and thus the smaller the amount of electrode slurry movement.

In one exemplary embodiment, the laser module 110 may be configured to allow adjustment of the position of the opening, relative to the transverse direction (TD) of the electrode sheet.

Referring to FIG. 3, the opening 112a of the masking member 112 may be configured to allow horizontal movement along the transverse direction (TD, y-direction) of the electrode sheet 10, thereby enabling movement of the electrode slurry from an end of the electrode slurry toward a central portion of the electrode slurry.

Hereinafter, a process for controlling the position and amount of laser irradiation to an electrode sheet will be described in accordance with one exemplary embodiment of the present invention.

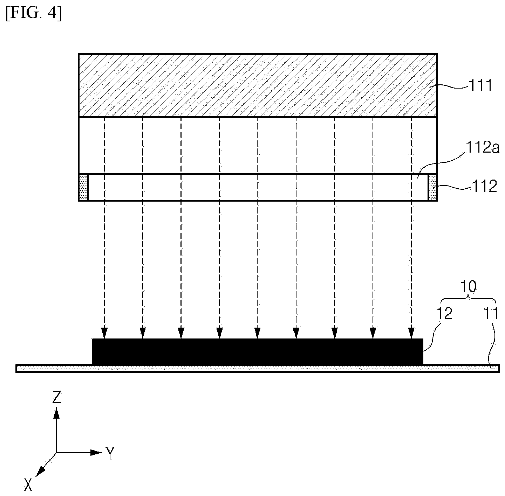

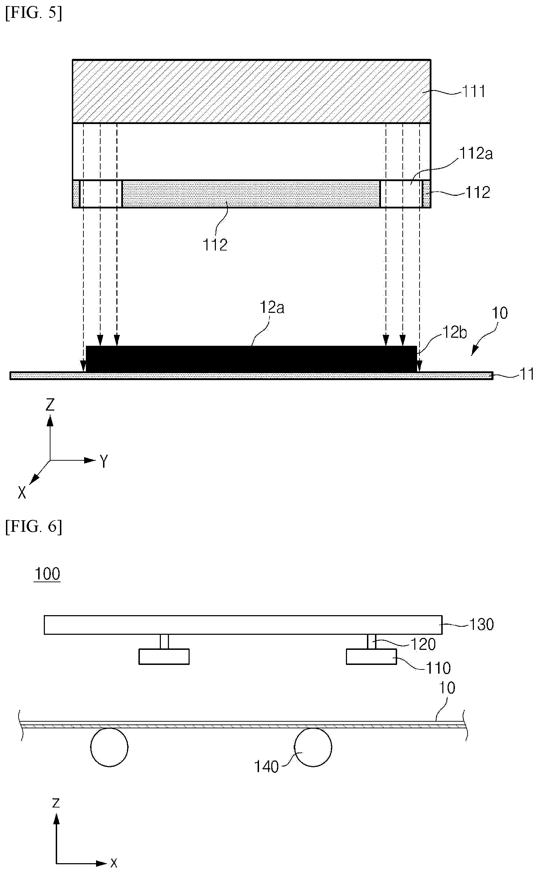

FIG. 4 and FIG. 5 are drawings illustrating a process for controlling where a laser is irradiated on an electrode sheet and the amount of irradiation from the laser according to one exemplary embodiment of the present invention.

Referring to FIG. 4, the electrode sheet 10 includes a coating portion 12 on which the electrode slurry is applied and a non-coating portion 11 on which the electrode slurry is not applied, and the opening 112a of the masking member 112 may be open in a size corresponding to a transverse (y-direction) width length of the coating portion. Accordingly, the laser (dotted arrow) generated by the laser oscillator 111 may pass through the opening 112a and irradiate the entire area along the transverse (y-direction) of the electrode slurry.

Referring to FIG. 5, the coating portion 12 to which the electrode slurry is applied may be distinguished by a center portion 12a and edge portion 12b around both transverse (y-direction) edges of the electrode coating portion. The opening 112a of the masking member 112 may be open to a size corresponding to the width-length of the edge portion 12b. Accordingly, the laser (dotted arrow) generated by the laser oscillator 111 may pass through the opening 112a and irradiate only the area of the edge portion 12b of the electrode coating portion 12.

Referring to FIG. 5, the coating portion 12 to which the electrode slurry is applied may be distinguished by a center portion 12a and edge portion 12b around both transverse (y-direction) edges of the electrode coating portion. The opening 112a of the masking member 112 may be open to a size corresponding to the width-length of the edge portion 12b. Accordingly, the laser (dotted arrow) generated by the laser oscillator 111 may pass through the opening 112a and irradiate only the area of the edge portion 12b of the electrode coating portion 12.

In this manner, the electrode shape control method of the present invention is configured to allow the masking member to adjust the position of the opening through which the laser passes through and the area of the opening, thereby controlling the position and/or area of the irradiated area of the laser.

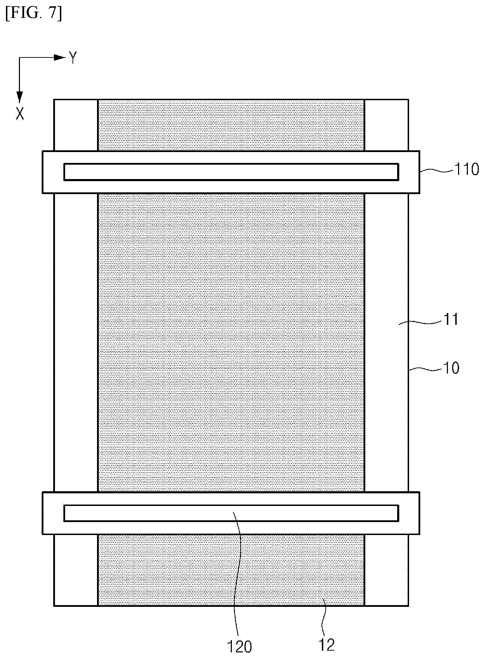

FIG. 6 is a side view of an electrode shape molding device according to one exemplary embodiment of the present invention, and FIG. 7 is a plan view of FIG. 6.

Referring to these drawings, an electrode shape control device 100 according to one embodiment of the present invention may include a laser module 110, a laser module driver 120, a frame 130, a transferring portion 140, and a controller (not shown).

The laser module 110 has been described above, and redundant descriptions are omitted.

The laser module driver portion 120, coupled to one side of the laser module 110, may serve to movably drive the laser module 110 along one or more of a longitudinal direction (x-direction) of the electrode sheet 10, a transverse direction (y-direction) of the electrode sheet 10, and a direction perpendicular to a plane of the electrode sheet (z-direction).

In one embodiment, the laser module drive portion 120 may be configured to independently drive each of the laser oscillator 111 and the masking member 112, that is, the laser module drive portion 120 may include a first drive portion to drive the laser oscillator 111 and a second drive portion to drive the masking member 112.

In one embodiment, the first driver portion may drive the laser oscillator 111 to be reciprocally movable along a direction perpendicular to the plane of the electrode sheet (z-direction) in order to adjust the vertical distance between the laser oscillator 111 and the electrode sheet 10.

Further, in one embodiment, the second driver may drive the masking member 112 reciprocally movable along a direction (z-direction) perpendicular to the plane of the electrode sheet 10 to adjust the vertical distance between the masking member 112 and the electrode sheet 10. In addition, the second driver may drive the masking member 112 reciprocally movable along a transverse direction (TD, y-direction) of the electrode sheet for adjusting the position of the opening 112a of the masking member 112.

The electrode shape control method according to such embodiments may appropriately control the amount of movement of the electrode slurry, as at least one of the laser oscillators 111 and the masking member 112 is configured to be reciprocally movable along a direction perpendicular to the plane of the electrode sheet 10.

The frame 130 may serve as a support on which the laser module 110 is mounted on an upper side of the electrode sheet 10.

The transferring portion 140 may serve to transfer the electrode sheet 10 in the machine direction (x-direction). The transferring portion 140 may include a transfer roller that drives the electrode sheet in one direction by rotational motion, and a motor (not shown) that imparts rotational motion force to the transfer roller.

The controller (not shown) may serve to control the motion of the various components of the electrode shape control device 100.

That is, the controller (not shown) may serve to control the position of the opening 112a, and to control one or more of the following conditions: a vertical distance between the laser oscillator 111 and the electrode sheet 10, a vertical distance between the masking member 112 and the electrode sheet 10, a power of the laser generated by the laser oscillator 111, and an opening area of the opening 112a.

By adjusting the position of the opening 112a, the controller may control the direction of movement of the electrode slurry.

Further, the controller also determines the vertical distance between the laser oscillator 111 and the electrode sheet 10, the vertical distance between the masking member 112 and the electrode sheet 10, and the vertical distance generated by the laser oscillator 111 from the power of the laser, the opening area of the opening 112a, and one or more of the above conditions, the amount of movement of the electrode slurry can be controlled.

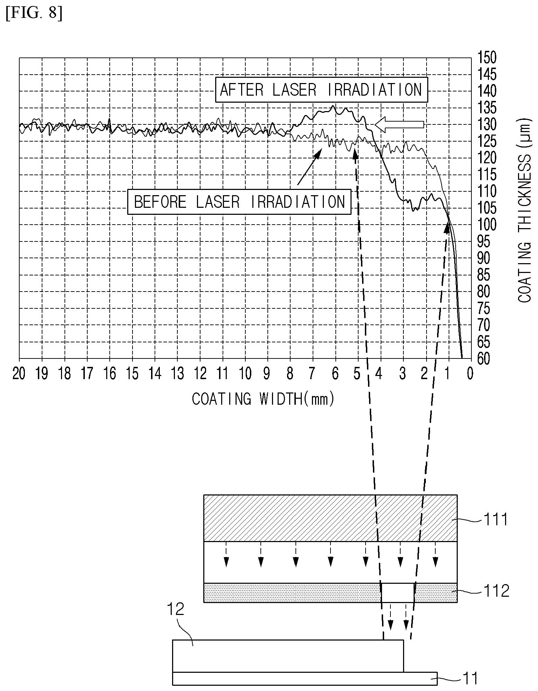

FIG. 8 is a graph depicting the results of measuring the thickness of each electrode slurry before and after irradiation with a laser, according to one embodiment of the present invention.

Referring to FIG. 8, the thickness of the electrode slurry prior to laser irradiation shows a gradual overall decrease from approximately 8 mm of the coating width along the x-axis to approximately 2 mm of the coating width, and then a rapid decrease thereafter. According to an embodiment of the present invention, when a laser is irradiated within an area from about 1 mm to about 5 mm of the coating width corresponding to the x-axis, the light energy of the irradiated laser increases the temperature of the electrode slurry to a state that facilitates flow and causes it to move in the direction of the arrow. As a result, the thickness of the electrode composite layer in the point from about 4 mm to about 1 mm of the coating width decreases, and the thickness of the electrode composite layer in the point from about 8 mm to 4 mm increases.

As described above, the electrode shape control method according to the present invention has the effect of facilitating molding of the electrode shape according to the intention of an operator by irradiating the laser at the position where an operator desires molding.

In addition, because the electrode shape is changed by moving the electrode slurry using a laser, there is almost no loss of the electrode slurry, and the shape can be changed in a sliding area, a flat area, or both of the areas of the electrode active material coating. Further, as the electrode shape is changed by moving the electrode slurry using a laser, there is almost no loss of the electrode slurry, and the shape can be changed in a sliding area, a plane area, or both areas of the electrode active material coating.

### [Modes of the Invention]

### [First embodiment]

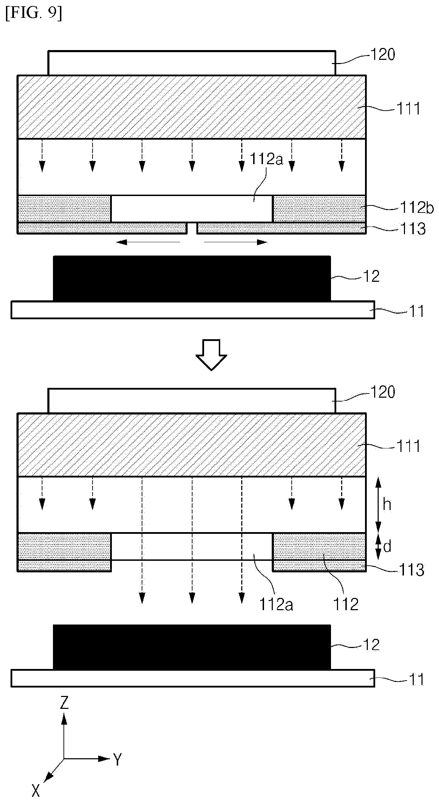

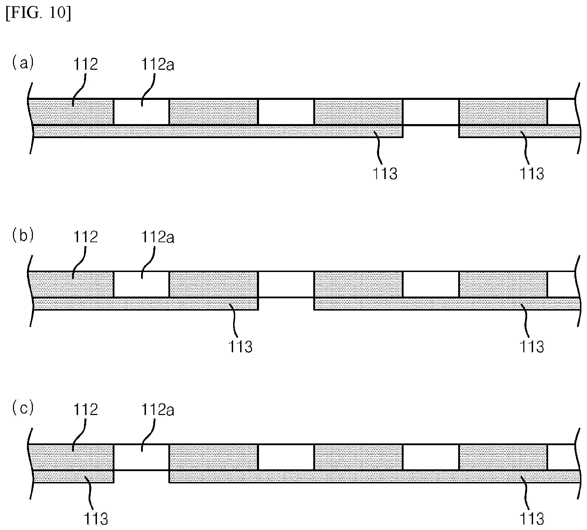

FIG. 9 is a side view of a laser module according to a first embodiment of the present invention, and FIG. 10 is a drawing to explain the operation of a masking member according to the first embodiment of FIG. 9.

Referring to these figures, the laser module 110 according to the first embodiment includes a masking member 112, wherein the masking member 112 is a plate-shaped member provided with a plurality of openings 112a and may include an opening and closing member (113) slidably movably coupled to a first plane of the plate-shaped member (112) for opening and closing at least one of said plurality of through-holes. In addition, a through-hole not blocked by the opening and closing member (113) may form the opening (112a).

The opening and closing member (113) may be configured to shield some or all of the opening formed by the opening (112a), and the opening position of the opening and/or the opening area of the opening may be controlled through operation of the opening and closing member (113).

The masking member 112 may be a plate-shaped member having a predetermined thickness (d).

The masking member 112 may be positioned between the laser oscillator 111 and the electrode sheet 10, relative to a direction perpendicular to the plane of the electrode sheet (z-direction).

The opening and closing member 113 may be coupled to one side of a plane of the plate-shaped masking member 112, and while FIG. 9 and FIG. 10 illustrate the opening and closing member 113 being coupled to a bottom surface of the masking member 112, it may also be coupled to a top surface of the masking member 112.

The opening and closing member 113 may be a plate-shaped member, with one opening and closing member slidably movable to shield some or all of the openings 112a that needs to be shielded, or two or more plate-shaped members may be assembled to form a single opening and closing member 113, as shown in FIG. 9 and FIG. 10, but the plurality of opening and closing members may be configured to each be independently slidably movable. In case of two or more opening and closing members 113, it may be easier to select the position of the opening 112a to be shielded.

The opening 112a may be in the form of a through-hole from one side of the masking member 112 to the other side, and the laser generated by the laser oscillator 111 may pass through the opening112a and be irradiated onto the electrode sheet, that is, the opening 112a may form an opening.

In the masking member 112, the portion where the through-hole is not formed may shield the laser generated from the laser oscillator 111.

Referring to FIGS. 9 and 10, a plurality of openings 112a are formed in the masking member 112, and the opening and closing member 113 can be slidably moved to a position that shields the laser generated by the laser oscillator 111.

Furthermore, as the opening and closing member 113 selects the through-hole to be shielded, the position at which the laser generated by the laser oscillator 111 is irradiated onto the electrode sheet can be adjusted. Accordingly, the direction of movement of the electrode slurry can be controlled.

Furthermore, the area of the through-hole shielded by the opening and closing member 113 can be adjusted. That is, all of the area of one through-hole can be shielded, or a part of the area of one through-hole can be shielded. By adjusting the area of the through hole shielded by the opening and closing member, the amount of laser irradiated to the electrode sheet 10 can be adjusted. Also, by adjusting the amount of laser irradiated to the electrode sheet, the amount of movement of the electrode slurry can be controlled.

In the method for controlling an electrode shape according to the embodiment, the electrode shape is controlled by irradiating a laser to the portion where the electrode shape is to be controlled.

In order to irradiate the laser to the area where the electrode shape is to be controlled, the opening and closing member 113 can be appropriately moved, the position of the opening of the masking member can be freely selected, and the opening area of the opening can be freely adjusted so that the irradiation amount of the laser can be appropriately controlled. Thus, an operator can freely select the irradiation area of the laser along the transverse direction of the retaining member on which the electrode slurry is applied. For example, if there is a protruding portion (fat edge) at both edges of the transverse direction (y-direction) of the coating portion to which the electrode slurry is applied, by adjusting the opening position and opening area of the opening of the masking member, it is possible to selectively irradiate only that portion and control the shape of the electrode to a desired shape.

### [Second embodiment]

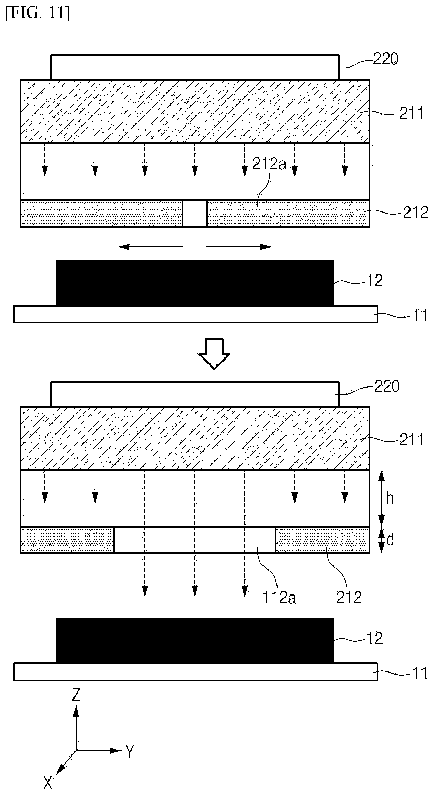

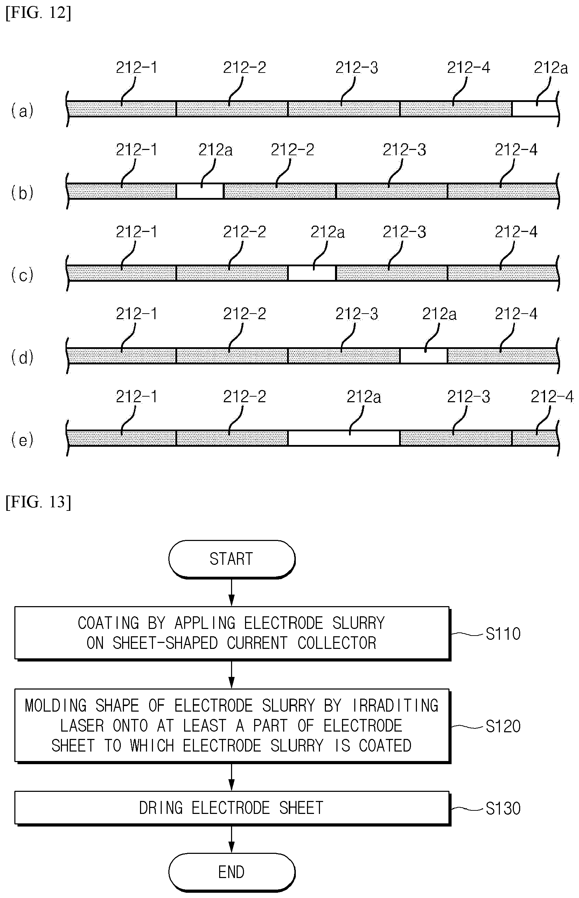

FIG. 11 is a side view of a laser module according to a second embodiment of the present invention, and FIG. 12 is a drawing to explain the operation of a masking member according to a first embodiment.

Referring to these figures, the laser module according to the second embodiment includes a masking member 212, and the masking member 212 includes a plurality of plate-shaped blocks 212-1, 212-2, 212-3, 212-4 arranged in a row along the transverse direction of the electrode sheet 10; each of the plurality of plate-shaped blocks 212-1 , 212-2, 212-3, 212-4 may include a block driver (not shown) that is horizontally movable along the transverse direction of the electrode sheet. Further, the spacing spaces 212a of the adjacent plate-shaped blocks may form the opening.

The plurality of plate-shaped blocks 212-1, 212-2, 212-3, 212-4 are assembled to form the masking member 212, and the laser generated from the laser oscillator 211 can reach the lower electrode sheet 10 through the mutual spacing spaces of the plate-shaped blocks.

To adjust the position and area where the electrode sheet is irradiated by the laser, a plurality of plate-shaped blocks 212-1, 212-2, 212-3, 212-4 may be respectively independently movable. As shown in FIG. 12, depending on the type of movement of the plurality of plate-shaped blocks 212-1, 212-2, 212-3, 212-4, the position and area where the electrode sheet is irradiated by the laser can be adjusted.

### Method of Manufacturing Electrode

FIG. 13 is a flowchart to explain a method of manufacturing an electrode according to one embodiment of the present invention.

Referring to FIG. 13, a method of manufacturing an electrode according to one embodiment of the present invention includes coating S110 in which an electrode slurry is applied to a sheet-shaped collector; molding S120 in which a laser is applied to at least a part of the electrode sheet to which the electrode slurry is applied, causing the electrode slurry in the laser-irradiated area to move to an adjacent portion, thereby molding S120 in which molding the shape of the electrode slurry; and drying S130 of the electrode sheet.

According to one embodiment of the present invention, in molding S120, the electrode slurry of the electrode sheet is preferably in a non-solidified state. This is because when the electrode slurry is completely dried and solidified, there is no or very little solvent component in the solidified electrode slurry, so it is not easy to move the electrode slurry even when irradiated with a laser, and the light energy of the laser may degrade the solidified electrode slurry and cause the electrode slurry to delaminate.

The coating S110 and the molding S120 have been described above in detail, and redundant descriptions are omitted.

The drying S130 may be removing the solvent from the electrode slurry, using a hot air supply mean and/or a radiant heat supply mean to the electrode sheet. The drying S130 may be performed in accordance with the technical content generally known in the technical field of electrodes for lithium secondary batteries.

According to one embodiment of the present invention, the molding S120 may be performed before the initial stage of the drying S130 of the electrode sheet.

Here, the initial stage of the drying may be an interval during which the drying is progressed such that 30% or more, or 50% or more, or 60% or more of the solvent remains in the electrode slurry, based on the total amount of solvent to be removed from the electrode slurry through the drying.

In the initial stage of the drying, there is still a substantial amount of solvent in the electrode slurry, so that the electrode slurry is in a state where it is easy to move, and thus the electrode shape can be molded into a shape desired by an operator by irradiating a laser according to the present invention.

According to one embodiment of the present invention, the molding S120 may be performed before the drying S130 of the electrode sheet. That is, after performing the molding S120 of the present invention with respect to an electrode sheet that has completed the coating S110, the drying S120 may be performed.

## Claims

1. A method for controlling an electrode shape, the method comprising:
molding (S120) a shape of an electrode slurry (12) by irradiating a laser onto at least a part of an electrode sheet (10) on which the electrode slurry (12) is applied, causing the electrode slurry (12) of the irradiated portion of the electrode sheet (10) to move to an adjacent portion,
**characterized in that**
the laser is an ultrahigh frequency near-infrared laser with a wavelength ranging from 500 nm to 1500 nm.

2. The method for controlling an electrode shape of claim 1, wherein the electrode slurry (12) of the electrode sheet (10) is in a non-solidified state when the molding is performed.

3. The method for controlling an electrode shape of claim 1, wherein the molding comprises a process of irradiating a laser using a laser module (110), wherein the laser module (110) comprises a laser oscillator (111, 211) that generates a laser and a masking member (112, 212) coupled below the laser oscillator (111, 211), and provided with one or more openings (112a) that allow at least a part of the laser generated from the laser oscillator (111, 211) to pass through.

4. The method for controlling an electrode shape of claim 3, wherein the laser module (110) is configured to allow adjusting the position of the one or more openings (112a) and the area of the one or more openings (112a).

5. The method for controlling an electrode shape of claim 3, wherein the laser module (110) is configured to allow adjusting the position of the one or more openings (112a), based on the transverse direction (TD) of the electrode sheet (10).

6. The method for controlling an electrode shape of claim 3, wherein the laser module (110) is configured to control an amount of movement of the electrode slurry (12) by controlling one or more of the following conditions: the vertical distance between the laser oscillator (111) and the electrode sheet (10), the vertical distance between the masking member (112) and the electrode sheet (10), and the output of the laser and the opening area of the one or more openings (112a).

7. The method for controlling an electrode shape of claim 3, wherein the laser module (110) is configured to control a direction of movement of the electrode slurry (12) by adjusting the position of the one or more openings (112a).

8. The method for controlling an electrode shape of claim 3, wherein the masking member (112) is a plate-shaped member provided with a plurality of through-holes, and for opening and closing at least one of the plurality of through-holes, comprises an opening and closing member (113) slidably movably coupled to one side of a plane of the plate-shaped member, wherein one or more of the plurality of through-holes that is not shielded by the opening and closing member (113) forms the one or more openings (112a).

9. The method for controlling an electrode shape of claim 3, wherein the masking member (212) comprises: a plurality of plate-shaped blocks (212-1, 212-2, 212-3, 212-4) arranged in a line along a transverse direction (TD) of the electrode sheet (10);
a block driver for horizontally moving each of the plurality of plate-shaped blocks (212-1, 212-2, 212-3, 212-4) along the transverse direction (TD) of the electrode sheet (10); and
spaced apart spaces of mutually adjacent plate-shaped blocks 212-1, 212-2, 212-3, 212-4) which form the one or more openings (112a).

10. The method for controlling an electrode shape of claim 3, wherein at least one or more among the laser oscillator (111, 211) and the masking member (112, 212) is configured to be reciprocally movable along a direction perpendicular to the plane of the electrode sheet (10).

11. A method of manufacturing an electrode comprising:
coating (S110) by applying an electrode slurry (12) to a sheet-shaped current collector (11);
the method of claim 1, thereby molding the electrode slurry (12); and
drying (S130) the electrode sheet.

12. The method of manufacturing an electrode of claim 11, wherein the electrode slurry (12) of the electrode sheet (10) is in a non-solidified state when the molding is performed.

13. The method of manufacturing an electrode of claim 11, wherein the molding (S120) is performed before the drying (S130) of the electrode sheet (10).

## Patentansprüche

1. Verfahren zum Steuern einer Elektrodenform, wobei das Verfahren Folgendes umfasst:
Formen (S120) einer Form einer Elektrodenaufschlämmung (12) durch Bestrahlen mindestens eines Teils eines Elektrodenblatts (10), auf das die Elektrodenaufschlämmung (12) aufgebracht ist, mit einem Laser, was bewirkt, dass sich die Elektrodenaufschlämmung (12) des bestrahlten Abschnitts des Elektrodenblatts (10) zu einem benachbarten Abschnitt bewegt,
**dadurch gekennzeichnet, dass**
der Laser ein Ultrahochfrequenz-Nahinfrarotlaser mit einer Wellenlänge im Bereich von 500 nm bis 1500 nm ist.

2. Verfahren zum Steuern einer Elektrodenform nach Anspruch 1, wobei sich die Elektrodenaufschlämmung (12) des Elektrodenblatts (10) in einem nicht erstarrten Zustand befindet, wenn das Formen durchgeführt wird.

3. Verfahren zum Steuern einer Elektrodenform nach Anspruch 1, wobei das Formen einen Prozess des Bestrahlens mit einem Laser unter Verwendung eines Lasermoduls (110) umfasst, wobei das Lasermodul (110) einen Laseroszillator (111, 211), der einen Laser erzeugt, und ein Maskierungselement (112, 212) umfasst, das unterhalb des Laseroszillators (111, 211) gekoppelt ist und mit einer oder mehreren Öffnungen (112a) versehen ist, die es mindestens einem Teil des von dem Laseroszillator (111, 211) erzeugten Lasers ermöglichen, hindurchzutreten.

4. Verfahren zum Steuern einer Elektrodenform nach Anspruch 3, wobei das Lasermodul (110) so konfiguriert ist, dass es das Einstellen der Position der einen oder mehreren Öffnungen (112a) und der Fläche der einen oder mehreren Öffnungen (112a) ermöglicht.

5. Verfahren zum Steuern einer Elektrodenform nach Anspruch 3, wobei das Lasermodul (110) so konfiguriert ist, dass es das Einstellen der Position der einen oder mehreren Öffnungen (112a) basierend auf der Querrichtung (TD) des Elektrodenblatts (10) ermöglicht.

6. Verfahren zum Steuern einer Elektrodenform nach Anspruch 3, wobei das Lasermodul (110) so konfiguriert ist, dass es ein Ausmaß der Bewegung der Elektrodenaufschlämmung (12) durch Steuern einer oder mehrerer der folgenden Bedingungen steuert: den vertikalen Abstand zwischen dem Laseroszillator (111) und dem Elektrodenblatt (10), den vertikalen Abstand zwischen dem Maskierungselement (112) und dem Elektrodenblatt (10) und die Leistung des Lasers und die Öffnungsfläche der einen oder mehreren Öffnungen (112a).

7. Verfahren zum Steuern einer Elektrodenform nach Anspruch 3, wobei das Lasermodul (110) so konfiguriert ist, dass es eine Bewegungsrichtung der Elektrodenaufschlämmung (12) durch Einstellen der Position der einen oder mehreren Öffnungen (112a) steuert.

8. Verfahren zum Steuern einer Elektrodenform nach Anspruch 3, wobei das Maskierungselement (112) ein plattenförmiges Element ist, das mit einer Vielzahl von Durchgangslöchern versehen ist, und zum Öffnen und Schließen mindestens eines der Vielzahl von Durchgangslöchern ein Öffnungs- und Schließelement (113) umfasst, das verschiebbar mit einer Seite einer Ebene des plattenförmigen Elements gekoppelt ist, wobei ein oder mehrere der Vielzahl von Durchgangslöchern, die nicht durch das Öffnungs- und Schließelement (113) abgeschirmt sind, die eine oder mehreren Öffnungen (112a) bilden.

9. Verfahren zum Steuern einer Elektrodenform nach Anspruch 3, wobei das Maskierungselement (212) Folgendes umfasst:
eine Vielzahl von plattenförmigen Blöcken (212-1, 212-2, 212-3, 212-4), die in einer Linie entlang einer Querrichtung (TD) des Elektrodenblatts (10) angeordnet sind;
einen Blockantrieb zum horizontalen Bewegen jedes der Vielzahl von plattenförmigen Blöcken (212-1, 212-2, 212-3, 212-4) entlang der Querrichtung (TD) des Elektrodenblatts (10); und
voneinander beabstandete Räume von zueinander benachbarten plattenförmigen Blöcken (212-1, 212-2, 212-3, 212-4), die die eine oder mehreren Öffnungen (112a) bilden.

10. Verfahren zum Steuern einer Elektrodenform nach Anspruch 3, wobei mindestens einer oder mehrere unter dem Laseroszillator (111, 211) und dem Maskierungselement (112, 212) so konfiguriert ist, dass er entlang einer Richtung senkrecht zur Ebene des Elektrodenblatts (10) hin- und herbewegbar ist.

11. Verfahren zur Herstellung einer Elektrode, umfassend:
Beschichten (S110) durch Aufbringen einer Elektrodenaufschlämmung (12) auf einen folienförmigen Stromsammler (11);
das Verfahren nach Anspruch 1, wodurch die Elektrodenaufschlämmung (12) geformt wird; und
Trocknen (S130) des Elektrodenblatts.

12. Verfahren zur Herstellung einer Elektrode nach Anspruch 11, wobei sich die Elektrodenaufschlämmung (12) des Elektrodenblatts (10) in einem nicht erstarrten Zustand befindet, wenn das Formen durchgeführt wird.

13. Verfahren zur Herstellung einer Elektrode nach Anspruch 11, wobei das Formen (S120) vor dem Trocknen (S130) des Elektrodenblatts (10) durchgeführt wird.

## Revendications

1. Procédé de contrôle d'une forme d'électrode, le procédé comprenant :
le moulage (S120) d'une forme d'une pâte d'électrode (12) en irradiant un laser sur au moins une partie d'une feuille d'électrode (10) sur laquelle la pâte d'électrode (12) est appliquée, amenant la pâte d'électrode (12) de la partie irradiée de la feuille d'électrode (10) à se déplacer vers une partie adjacente,
**caractérisé en ce que**
le laser est un laser proche infrarouge à ultra haute fréquence avec une longueur d'onde allant de 500 nm à 1500 nm.

2. Procédé de contrôle d'une forme d'électrode selon la revendication 1, dans lequel la pâte d'électrode (12) de la feuille d'électrode (10) est dans un état non solidifié lorsque le moulage est effectué.

3. Procédé de contrôle d'une forme d'électrode selon la revendication 1, dans lequel le moulage comprend un processus d'irradiation par un laser au moyen d'un module laser (110), dans lequel le module laser (110) comprend un oscillateur laser (111, 211) qui génère un laser et un élément de masquage (112, 212) couplé en dessous de l'oscillateur laser (111, 211), et pourvu d'une ou plusieurs ouvertures (112a) qui permettent à au moins une partie du laser généré par l'oscillateur laser (111, 211) de passer à travers.

4. Procédé de contrôle d'une forme d'électrode selon la revendication 3, dans lequel le module laser (110) est configuré pour permettre l'ajustement de la position de la ou des ouvertures (112a) et de la surface de la ou des ouvertures (112a).

5. Procédé de contrôle d'une forme d'électrode selon la revendication 3, dans lequel le module laser (110) est configuré pour permettre l'ajustement de la position de la ou des ouvertures (112a), sur la base de la direction transversale (TD) de la feuille d'électrode (10).

6. Procédé de contrôle d'une forme d'électrode selon la revendication 3, dans lequel le module laser (110) est configuré pour contrôler une quantité de déplacement de la pâte d'électrode (12) en contrôlant une ou plusieurs des conditions suivantes : la distance verticale entre l'oscillateur laser (111) et la feuille d'électrode (10), la distance verticale entre l'élément de masquage (112) et la feuille d'électrode (10), et la puissance du laser et la surface d'ouverture de la ou des ouvertures (112a).

7. Procédé de contrôle d'une forme d'électrode selon la revendication 3, dans lequel le module laser (110) est configuré pour contrôler une direction de déplacement de la pâte d'électrode (12) en ajustant la position de la ou des ouvertures (112a).

8. Procédé de contrôle d'une forme d'électrode selon la revendication 3, dans lequel l'élément de masquage (112) est un élément en forme de plaque pourvu d'une pluralité de trous traversants, et pour ouvrir et fermer au moins l'un de la pluralité de trous traversants, comprend un élément d'ouverture et de fermeture (113) couplé de manière mobile en coulissement à un côté d'un plan de l'élément en forme de plaque, dans lequel un ou plusieurs de la pluralité de trous traversants qui ne sont pas masqués par l'élément d'ouverture et de fermeture (113) forment la ou les ouvertures (112a).

9. Procédé de contrôle d'une forme d'électrode selon la revendication 3, dans lequel l'élément de masquage (212) comprend :
une pluralité de blocs en forme de plaque (212-1, 212-2, 212-3, 212-4) disposés en ligne le long d'une direction transversale (TD) de la feuille d'électrode (10) ;
un entraînement de bloc pour déplacer horizontalement chacun de la pluralité de blocs en forme de plaque (212-1, 212-2, 212-3, 212-4) le long de la direction transversale (TD) de la feuille d'électrode (10) ; et
des espaces espacés de blocs en forme de plaque (212-1, 212-2, 212-3, 212-4) mutuellement adjacents qui forment la ou les ouvertures (112a).

10. Procédé de contrôle d'une forme d'électrode selon la revendication 3, dans lequel au moins l'un ou plusieurs parmi l'oscillateur laser (111, 211) et l'élément de masquage (112, 212) est configuré pour être mobile en va-et-vient le long d'une direction perpendiculaire au plan de la feuille d'électrode (10).

11. Procédé de fabrication d'une électrode comprenant :
l'enduction (S110) en appliquant une pâte d'électrode (12) sur un collecteur de courant en forme de feuille (11) ;
le procédé selon la revendication 1, moulant ainsi la pâte d'électrode (12) ; et
le séchage (S130) de la feuille d'électrode.

12. Procédé de fabrication d'une électrode selon la revendication 11, dans lequel la pâte d'électrode (12) de la feuille d'électrode (10) est dans un état non solidifié lorsque le moulage est effectué.

13. Procédé de fabrication d'une électrode selon la revendication 11, dans lequel le moulage (S120) est effectué avant le séchage (S130) de la feuille d'électrode (10).
